# EUROPEAN PATENT APPLICATION

(11) **EP 4 819 245 A1**
(43) Date of publication of application: **07.10.2026**
(21) Application number: 24899315.6
(22) Date of filing: 07.08.2024
(51) Int. Cl.: H01M 4/587, C01B 32/205

(54) **GRAPHITE MATERIAL, PREPARATION METHOD THEREFOR, NEGATIVE ELECTRODE PIECE CONTAINING GRAPHITE MATERIAL, BATTERY, AND ELECTRICAL APPARATUS**

(30) Priority: 07.12.2023 CN 202311677312
(71) Applicant: Contemporary Amperex Technology Co., Limited, Ningde, Fujian 352100 (CN)
(72) Inventor: CHEN, Meiwan, Ningde, Fujian 352100 (CN); MA, Jianjun, Ningde, Fujian 352100 (CN); LIU, Wei, Ningde, Fujian 352100 (CN); HE, Libing, Ningde, Fujian 352100 (CN)
(74) Representative: Ziebig Hengelhaupt Intellectual Property Attorneys Patentanwaltskanzlei PartGmbB
(86) International application number: PCT/CN2024/110411
(87) International publication number: WO 2025/118666

(57) **Abstract**

A graphite material, a preparation method therefor, a negative electrode piece containing graphite material, a battery, and an electrical apparatus. The graphite material satisfies (Lc_{100%SOC} - Lc_{0%SOC})/Lc_{50%SOC} ≤ 0.0750, and Lc_{0%SOC} is less than or equal to 50 nm. The graphite material enables the battery to have a long cycle life.

## Description

### CROSS-REFERENCE TO RELATED APPLICATIONS

The present application claims priority to Chinese Patent Application No. 202311677312.1, filed on December 07, 2023 and entitled "GRAPHITE MATERIAL AND PREPARATION METHOD THEREFOR, NEGATIVE ELECTRODE PLATE CONTAINING SAME, BATTERY, AND POWER CONSUMING APPARATUS", which is incorporated herein by reference in its entirety.

### TECHNICAL FIELD

The present application relates to a graphite material and a preparation method therefor, a negative electrode plate containing the same, a battery, and a power consuming apparatus.

### BACKGROUND

In recent years, batteries have been widely applied to the field of energy storage, resulting in increasingly high requirements of people for the cycle life of batteries. However, how to enable the battery to have a longer cycle life while having a high energy density is still a difficulty in the current battery development.

### SUMMARY

The present application provides a graphite material and a preparation method therefor, a negative electrode plate containing the same, a battery, and a power consuming apparatus, which can enable the battery to have a long cycle life.

According to a first aspect, the present application provides a graphite material, where the graphite material satisfies (Lc_{100%SOC} - Lc_{0%SOC})/Lc_{50%SOC} ≤ 0.0750 and Lc_{0%SOC} being less than or equal to 50 nm.

Lc_{0%SOC} represents a grain size of the graphite material in a 0% SOC lithium intercalation state along a c-axis direction, in units of nm; Lc_{50%SOC} represents a grain size of the graphite material in a 50% SOC lithium intercalation state along the c-axis direction, in units of nm; Lc_{100%SOC} represents a grain size of the graphite material in a 100% SOC lithium intercalation state along the c-axis direction, in units of nm.

The graphite material provided by the present application satisfies (Lc_{100%SOC} - Lc_{0%SOC})/Lc_{50%SOC} ≤ 0.0750 and Lc_{0%SOC} being less than or equal to 50 nm. The grain size of the graphite material in the 0% SOC lithium intercalation state along the c-axis direction is small. Moreover, a volumetric change of the graphite material during the entire lithium intercalation is small, and therefore, lattice expansion of the graphite material during battery charging can be reduced, reducing thickness expansion of a negative electrode plate, making it possible to reduce negative electrode-electrolyte solution interface side reactions, and reducing irreversible consumption of lithium ions, which in turn can improve the cycle life of the battery and is conducive to satisfying the needs of long-life energy storage batteries.

In some embodiments, 0.0100 ≤ (Lc_{100%SOC} - Lc_{0%SOC})/Lc_{50%SOC} ≤ 0.0750, and optionally, 0.0100 ≤ (Lc_{100%SOC} - Lc_{0%SOC})/Lc_{50%SOC} ≤ 0.0500. As such, it is conducive to enabling the battery to have both a high energy density and a long cycle life.

In some embodiments, 15 nm ≤ Lc_{0%SOC} ≤ 47 nm, and optionally, 25 nm ≤ Lc_{0%SOC} ≤ 45 nm. When the grain size Lc_{0%SOC} of the graphite material in the 0% SOC lithium intercalation state along the c-axis direction is within the above range, the lattice expansion of the graphite material during battery charging can be further reduced, reducing the thickness expansion of the negative electrode plate, making it possible to further reduce the negative electrode-electrolyte solution interface side reactions, and reducing the irreversible consumption of lithium ions, which in turn can further improve the cycle life of the battery.

In some embodiments, 20 nm ≤ Lc_{100%SOC} ≤ 60 nm, and optionally, 28 nm ≤ Lc_{100%SOC} ≤50 nm. When the grain size Lc_{100%SOC} of the graphite material in the 100% SOC lithium intercalation state along the c-axis direction is within the above range, the lattice expansion of the graphite material during battery charging can be further reduced, reducing the thickness expansion of the negative electrode plate, making it possible to further reduce the negative electrode-electrolyte solution interface side reactions, and reducing the irreversible consumption of lithium ions, which in turn can further improve the cycle life of the battery.

In some embodiments, a gravimetric capacity of the graphite material is from 280 mAh/g to 340 mAh/g, and is optionally from 290 mAh/g to 335 mAh/g. When the gravimetric capacity of the graphite material is within the above range, it is conducive to enabling the battery to have both a high energy density and a long cycle life.

In some embodiments, a volume distribution particle size Dv1 of the graphite material is from 0.5 µm to 3.1 µm, and is optionally from 1 µm to 2.5 µm.

In some embodiments, a volume distribution particle size Dv10 of the graphite material is from 3 µm to 6.2 µm, and is optionally from 3.2 µm to 5 µm.

In some embodiments, a volume distribution particle size Dv50 of the graphite material is from 5 µm to 15 µm, and is optionally from 8 µm to 12 µm.

By adjusting the volume distribution particle size of the graphite material, the grain size of the graphite material along the c-axis direction during lithium intercalation can be reduced, and therefore, the lattice expansion of the graphite material during battery charging can be reduced, reducing the thickness expansion of the negative electrode plate, making it possible to reduce the negative electrode-electrolyte solution interface side reactions, and reducing the irreversible consumption of lithium ions, which in turn can improve the cycle life of the battery. It is also possible to increase lithium intercalation channels of the graphite material, thereby reducing lithium deposition.

In some embodiments, a particle size distribution (Dv90 - Dv10)/Dv50 of the graphite material is from 1.02 to 1.57, and is optionally from 1.11 to 1.49.

When the particle size distribution (Dv90 - Dv10)/Dv50 of the graphite material is within the above range, the thickness expansion of the negative electrode plate during battery charging can be reduced, making it possible to reduce the negative electrode-electrolyte solution interface side reactions, and reducing the irreversible consumption of lithium ions, which in turn can improve the cycle life of the battery.

In some embodiments, a grain size La_{0%SOC} of the graphite material in the 0% SOC lithium intercalation state along an a-axis direction is less than or equal to 140 nm. When the grain size La_{0%SOC} of the graphite material in the 0% SOC lithium intercalation state along the a-axis direction is within the above range, the graphite material has features of a high degree of isotropy and a small grain size, and therefore, the graphite material can have more lithium intercalation channels, making it possible to reduce the lithium deposition, which is conducive to improving the cycle life of the battery.

In some embodiments, a degree of graphitization of the graphite material is from 70% to 88%, and is optionally from 75% to 85%. When the degree of graphitization of the graphite material is within the above range, on the one hand, the graphite material can have a high capacity, enabling the battery to have a high energy density. On the other hand, the grain size of the graphite material along the c-axis direction during lithium intercalation can be reduced, and therefore, the lattice expansion of the graphite material during battery charging can be reduced, reducing the thickness expansion of the negative electrode plate, making it possible to reduce the negative electrode-electrolyte solution interface side reactions, and reducing the irreversible consumption of lithium ions, which in turn can improve the cycle life of the battery.

In some embodiments, a tap density of the graphite material is from 1.0 m³/g to 1.3 m³/g. When the tap density of the graphite material is within the above range, the compaction density of a negative electrode film layer can be increased, which is conducive to enabling the battery to have a high energy density.

In some embodiments, a specific surface area of the graphite material is from 0.6 m²/g to 2 m²/g. When the specific surface area of the graphite material is within the above range, the negative electrode-electrolyte solution interface side reactions can be reduced, reducing the irreversible consumption of lithium ions, which in turn can improve the cycle life of the battery.

In some embodiments, the graphite material further includes a carbon layer on a surface thereof.

According to a second aspect, the present application provides a preparation method for a graphite material, including the following steps: providing a coke raw material; performing crushing treatment, shaping treatment, and classification treatment on the coke raw material to obtain a graphite precursor; and placing the obtained graphite precursor in a graphitization furnace to perform graphitization treatment at a preset temperature for preset time, cooling and then taking a product out of the furnace to obtain a graphite material, where the preset temperature is less than 3000°C, and the preset time is less than 24 h, where the graphite material satisfies (Lc_{100%SOC} - Lc_{0%SOC})/Lc_{50%SOC} ≤ 0.0750 and Lc_{0%SOC} being less than or equal to 50 nm; Lc_{0%SOC} represents a grain size of the graphite material in a 0% SOC lithium intercalation state along a c-axis direction, in units of nm; Lc_{50%SOC} represents a grain size of the graphite material in a 50% SOC lithium intercalation state along the c-axis direction, in units of nm; Lc_{100%SOC} represents a grain size of the graphite material in a 100% SOC lithium intercalation state along the c-axis direction, in units of nm.

The graphite material prepared by the preparation method provided by the embodiments of the present application has a small grain size along the c-axis direction. Moreover, a volumetric change of the graphite material during the entire lithium intercalation is small, and therefore, lattice expansion of the graphite material during battery charging can be reduced, reducing thickness expansion of a negative electrode plate, making it possible to reduce negative electrode-electrolyte solution interface side reactions, and reducing irreversible consumption of lithium ions, which in turn can improve the cycle life of the battery.

In some embodiments, the graphitization furnace is a continuous graphitization furnace.

In some embodiments, the preset temperature is from 2500°C to 2800°C, and is optionally from 2500°C to 2750°C.

In some embodiments, the preset time is from 6 h to 18 h, and is optionally from 8 h to 15 h.

By further adjusting the preset temperature and/or the preset time of the graphitization treatment, on the one hand, the lattice expansion of the graphite material during battery charging can be reduced, reducing the thickness expansion of the negative electrode plate, reducing the negative electrode-electrolyte solution interface side reactions, reducing the irreversible consumption of lithium ions, and thereby improving the cycle life of the battery. On the other hand, the graphite material can have a high gravimetric capacity, which in turn can enable the battery to have both a long cycle life and a high energy density.

In some embodiments, the coke raw material includes at least one of petroleum coke or needle coke.

In some embodiments, the coke raw material is petroleum coke, and based on a structural total volume of the coke raw material, a volumetric proportion of mosaic and domain structures in the petroleum coke is greater than or equal to 60%, and is optionally from 65% to 80%.

In some embodiments, the coke raw material is needle coke, and based on a structural total volume of the coke raw material, a volumetric proportion of fibrous structures in the needle coke is from 40% to 60%, and is optionally from 45% to 55%.

By selecting the above specific types of coke raw material, the rate of grain growth is slower under the same graphitization treatment condition, thereby facilitating adjusting the degree of grain growth during graphitization, and making it possible to reduce volumetric changes of prepared graphite particles during battery charging and discharging.

In some embodiments, the coke raw material further satisfies: a volatile mass content is less than or equal to 10 wt%, an ash mass content is less than or equal to 0.3 wt%, and a sulfur mass content is less than or equal to 2 wt%.

In some embodiments, in the step of performing the crushing treatment, the shaping treatment, and the classification treatment on the coke raw material to obtain the graphite precursor, a volume distribution particle size Dv1 of the obtained graphite precursor is greater than or equal to 0.3 µm, and is optionally from 0.3 µm to 1.4 µm; and/or a volume distribution particle size Dv10 of the obtained graphite precursor is greater than or equal to 2.0 µm, and is optionally from 2.1 µm to 4.0 µm; and/or a volume distribution particle size Dv50 of the obtained graphite precursor is from 5 µm to 16 µm, and is optionally from 8 µm to 11 µm; and/or a particle size distribution (Dv90 - Dv10)/Dv50 of the obtained graphite precursor is from 1.05 to 1.61, and is optionally from 1.18 to 1.52.

By adjusting the volume particle size distribution of the graphite precursor as being within the above range, the grain size of the graphite material crystal along the c-axis direction can be reduced, reducing volumetric expansion of the graphite material during battery charging, and making it possible to enable the graphite material to have good kinetic performance.

In some embodiments, before placing the obtained graphite precursor in the graphitization furnace to perform the graphitization treatment at the preset temperature for the preset time, the preparation method further includes a step of: performing pre-carbonization treatment on the obtained graphite precursor. Optionally, the obtained graphite precursor is heated to a temperature from 600°C to 1100°C at a temperature rising rate from 1 °C/min to 5 °C/min and held at the temperature for 18 h to 24 h for the pre-carbonization treatment.

In some embodiments, the preparation method further includes a step of: after placing the obtained graphite precursor in the graphitization furnace to perform the graphitization treatment at the preset temperature for the preset time, performing sieving and demagnetization to obtain the graphite material.

In some embodiments, the preparation method further includes a step of: mixing the obtained graphite material with a coating agent and placing a mixture in a carbonization furnace to perform carbonization treatment, to form a carbon layer on a surface of the graphite material.

Optionally, the coating agent includes pitch, and more optionally, a softening point temperature of the pitch is from 150°C to 300°C, and is optionally from 200°C to 250°C.

Optionally, a temperature of the carbonization treatment is from 950°C to 1300°C, and is optionally from 1100°C to 1200°C.

Optionally, time of the carbonization treatment is from 1 h to 5 h, and is optionally from 2 h to 3 h.

According to a third aspect, the present application provides a negative electrode plate, including a negative electrode current collector and a negative electrode film layer located on at least one surface of the negative electrode current collector, where the negative electrode film layer includes the graphite material according to the first aspect of the present application or the graphite material prepared by the preparation method according to the second aspect of the present application.

In some embodiments, a compaction density of the negative electrode film layer is from 1.15 g/cm³ to 1.55 g/cm³.

In some embodiments, an areal density of the negative electrode film layer is from 7 mg/cm² to 15 mg/cm².

According to a fourth aspect, the present application provides a battery, including the negative electrode plate according to the third aspect of the present application.

According to a fifth aspect, the present application provides a power consuming apparatus, including the battery according to the fourth aspect of the present application, where the battery is used for providing electrical energy.

The power consuming apparatus of the present application includes the battery provided in the present application, and therefore has at least the same advantages as the battery.

### BRIEF DESCRIPTION OF THE DRAWINGS

In order to more clearly describe the technical solutions in the embodiments of the present application, drawings required for use in the embodiments of the present application will be briefly described below. It is clear that the drawings described below are merely some embodiments of the present application, and those skilled in the art may also derive other drawings from the drawings without creative effort.
FIG. 1 is a schematic diagram of a battery cell according to some embodiments of the present application;
FIG. 2 is a schematic exploded view of the battery cell according to some embodiments of the present application;
FIG. 3 is a schematic diagram of a battery module according to some embodiments of the present application;
FIG. 4 is a schematic diagram of a battery pack according to some embodiments of the present application;
FIG. 5 is a schematic exploded view of the battery pack shown in FIG. 4; and
FIG. 6 is a schematic diagram of a power consuming apparatus according to some embodiments of the present application.

In the drawings, the components are not necessarily drawn to actual scale. Description of reference numerals: 1 - battery pack, 2 - upper box body, 3 - lower box body, 4 - battery module, 5 - battery cell, 51 - case, 52 - electrode assembly, and 53 - cover plate.

### DETAILED DESCRIPTION

Embodiments of a graphite material and a preparation method therefor, a negative electrode plate containing the same, a battery, and a power consuming apparatus in the present application are disclosed in detail below by properly referring to the detailed description of the drawings. However, there will be cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

The "range" disclosed in the present application is defined in terms of lower and upper limits, and a given range is defined by selecting a lower limit and an upper limit, which define the boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also expected. Additionally, if the minimum range values 1 and 2 are listed, and if the maximum range values 3, 4 and 5 are listed, the following ranges are all contemplated: 1-3, 1-4, 1-5, 2-3, 2-4 and 2-5. In the present application, unless stated otherwise, the numerical range "a-b" represents an abbreviated representation of any combination of real numbers between a to b, where both a and b are real numbers. For example, the numerical range "0-5" means that all real numbers between "0-5" have been listed herein, and "0-5" is just an abbreviated representation of the combination of these numerical values. Additionally, when it is stated that a parameter is an integer ≥ 2, it is equivalent to disclosing that the parameter is, for example, an integer of 2, 3, 4, 5, 6, 7, 8, 9, 10, 11, 12, etc.

Unless otherwise specified, all embodiments and optional embodiments of the present application may be combined with each other to form new technical solutions, and it is conceivable that such technical solutions should be included in the disclosure of the present application.

Unless otherwise specified, all technical features and optional technical features of the present application may be combined with each other to form new technical solutions, and it is conceivable that such technical solutions should be included in the disclosure of the present application.

Unless otherwise specified, all steps of the present application may be performed sequentially or randomly, and preferably sequentially. For example, the method includes steps (a) and (b), indicating that the method may include steps (a) and (b) performed sequentially, or may include steps (b) and (a) performed sequentially. For example, the reference to the method may further include step (c), meaning that step (c) may be added to the method in any order, for example, the method may include steps (a), (b) and (c), or may include steps (a), (c) and (b), or may include steps (c), (a) and (b), and so on.

In the present application, the terms "a plurality of" and "various" mean two or more.

Unless otherwise specified, the terms used in the present application have meanings as commonly understood by those skilled in the art.

Unless otherwise specified, the numerical values of each parameter mentioned in the present application can be measured by various test methods commonly used in the art, for example, they can be measured according to the test methods provided in the embodiments of the present application. A test temperature for each parameter is 25°C, unless otherwise specified.

A battery mentioned in the embodiments of the present application may be a single physical module including one or a plurality of battery cells to provide a higher voltage and capacity. For example, the battery mentioned in the present application may include a battery cell, a battery module, a battery pack, or the like.

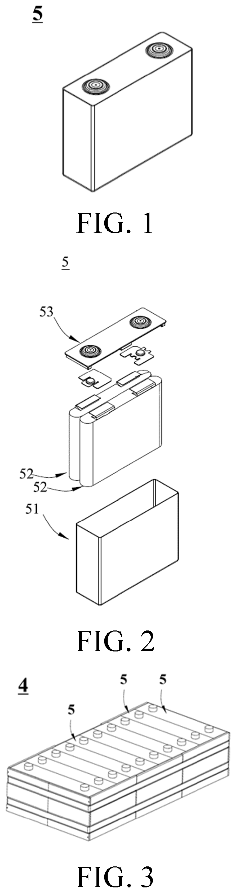

The battery cell is a minimum unit constituting a battery, which can implement charge and discharge functions alone. The battery cell may be in a shape of a cylinder, a cuboid, or other shapes, which are not limited in the embodiments of the present application. FIG. 1 shows a battery cell 5 of a cuboidal structure as an example.

When there are a plurality of battery cells, the plurality of battery cells are connected in series, in parallel, or in series-parallel through a bus-bar component. In some embodiments, the battery may be a battery module. When there are a plurality of battery cells, the plurality of battery cells are arranged and fixed to form a battery module. In some embodiments, the battery may be a battery pack including a box body and a battery cell, where the battery cell or the battery module is accommodated in the box body. In some embodiments, the box body may serve as a part of a chassis structure of a vehicle. For example, a part of the box body may be at least part of a chassis of a vehicle, or a part of the box body may be at least part of a transverse beam and a longitudinal beam of a vehicle.

In some embodiments, the battery may be an energy storage apparatus. The energy storage apparatus includes an energy storage container, an energy storage cabinet, etc.

The battery cell generally includes an electrode assembly and an electrolyte. The electrode assembly generally includes a positive electrode plate and a negative electrode plate. The electrode assembly may be a wound structure or a laminated structure, which is not limited in the embodiments of the present application.

The battery cell may further include an outer package that may be used to package the electrode assembly and the electrolyte. The outer package may be a hard case, for example, a hard plastic case, an aluminum case, a steel case, etc. The outer package may alternatively be a soft pack, for example, a pouch type soft pack. The soft pack may be made from plastic, for example, one or more of polypropylene (PP), polybutylene terephthalate (PBT), and polybutylene succinate (PBS).

In some embodiments, as shown in FIG. 2, the outer package may include a case 51 and a cover plate 53. The case 51 may include a bottom plate and side plates connected to the bottom plate, where the bottom plate and the side plates form an accommodating cavity by enclosing. The case 51 has an opening communicating with the accommodating cavity, and the cover plate 53 is used to cover the opening to close the accommodating cavity. The electrode assembly 52 is packaged within the accommodating cavity. One or more electrode assemblies 52 may be included in the battery cell 5, which may be adjusted as required.

In some embodiments, the battery cells may be assembled into a battery module. A plurality of battery cells may be included in the battery module, and the specific number thereof may be adjusted based on the application and capacity of the battery module. FIG. 3 is a schematic diagram of a battery module 4 as an example. As shown in FIG. 3, in the battery module 4, a plurality of battery cells 5 may be sequentially arranged along the length direction of the battery module 4. Of course, any other arrangements are also possible. The plurality of battery cells 5 may further be fixed by fasteners.

Optionally, the battery module 4 may further include a housing having an accommodating space, in which the plurality of battery cells 5 are accommodated.

In some embodiments, the battery modules may be further assembled into a battery pack, and the number of battery modules included in the battery pack may be adjusted based on the application and capacity of the battery pack.

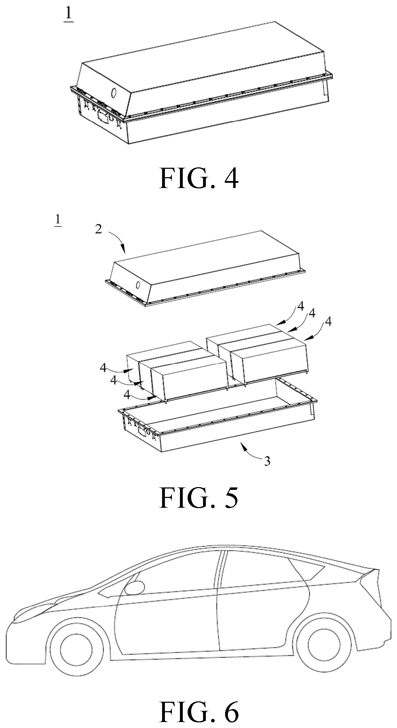

FIG. 4 and FIG. 5 are schematic diagrams of a battery pack 1 as an example. As shown in FIG. 4 and FIG. 5, the battery pack 1 may include a box body and a plurality of battery modules 4 disposed in the box body. The box body includes an upper box body 2 and a lower box body 3. The upper box body 2 is used for covering the lower box body 3 and form an enclosed space for accommodating the battery modules 4. The plurality of battery modules 4 may be arranged in the box body in any manner.

The battery provided in the embodiments of present application may include a lithium-ion battery.

A graphite material provided in the embodiments of present application satisfies (Lc_{100%SOC} - Lc_{0%SOC})/Lc_{50%SOC} ≤ 0.0750 and Lc_{0%SOC} being less than or equal to 50 nm.

Lc_{0%SOC} represents a grain size of the graphite material in a 0% SOC lithium intercalation state along a c-axis direction, in units of nm; Lc_{50%SOC} represents a grain size of the graphite material in a 50% SOC lithium intercalation state along the c-axis direction, in units of nm; Lc_{100%SOC} represents a grain size of the graphite material in a 100% SOC lithium intercalation state along the c-axis direction, in units of nm.

As the degree of charging of the battery increases, lithium ions are continuously intercalated into the lattice of the graphite material, thereby expanding the lattice of the graphite material. Moreover, with the increase of the number of battery cycles, the graphite material undergoes large lattice expansion, causing a large volumetric change in a graphite material particle, which in turn leads to repeated fragmentation and generation of a solid electrolyte interface (SEI) film on the surface of the graphite material particle, thereby increasing negative electrode-electrolyte solution interface side reactions, increasing irreversible consumption of lithium ions, and affecting the cycle life of the battery. In addition, the large lattice expansion of the graphite material weakens electronic contact between the graphite material particles and a negative electrode collector, so that part of the graphite material particles lose electronic contact and electrochemical activity, causing local current unevenness of the negative electrode, which in turn speeds up lithium plating and speeds up capacity fading of battery, thereby reducing cycle performance of the battery.

The graphite material provided by the present application satisfies (Lc_{100%SOC} - Lc_{0%SOC})/Lc_{50%SOC} being greater than 0 and less than or equal to 0.0750 and Lc_{0%SOC} being greater than 0 and less than or equal to 50 nm. The grain size of the graphite material in the 0% SOC lithium intercalation state along the c-axis direction is small. Moreover, a volumetric change of the graphite material during the entire lithium intercalation is small, and therefore, lattice expansion of the graphite material during battery charging can be reduced, reducing thickness expansion of a negative electrode plate, making it possible to reduce negative electrode-electrolyte solution interface side reactions, and reducing irreversible consumption of lithium ions, which in turn can improve the cycle life of the battery and is conducive to satisfying the needs of long-life energy storage batteries.

Optionally, (Lc_{100%SOC} - Lc_{0%SOC})/Lc_{50%SOC} may be 0.0100, 0.0120, 0.0140, 0.0155, 0.0169, 0.0185, 0.0200, 0.0250, 0.0300, 0.0350, 0.0400, 0.0440, 0.0500, 0.0550, 0.0600, 0.0650, 0.0700, 0.0750, or in a range formed by any of the above numerical values.

Optionally, in some embodiments, 0.0100 ≤ (Lc_{100%SOC} - Lc_{0%SOC})/Lc_{50%SOC} ≤ 0.0750, and optionally, 0.0100 ≤ (Lc_{100%SOC} - Lc_{0%SOC})/Lc_{50%SOC} ≤ 0.0500. As such, it is conducive to enabling the battery to have both a high energy density and a long cycle life.

In some embodiments, 15 nm ≤ Lc_{0%SOC} ≤ 47 nm, and optionally, 25 nm ≤ Lc_{0%SOC} ≤ 45 nm.

When the grain size Lc_{0%SOC} of the graphite material in the 0% SOC lithium intercalation state along the c-axis direction is within the above range, the lattice expansion of the graphite material during battery charging can be further reduced, reducing the thickness expansion of the negative electrode plate, making it possible to further reduce the negative electrode-electrolyte solution interface side reactions, and reducing the irreversible consumption of lithium ions, which in turn can further improve the cycle life of the battery.

In some embodiments, 20 nm ≤ Lc_{100%SOC} ≤ 60 nm, and optionally, 28 nm ≤ Lc_{100%SOC} ≤50 nm.

When the grain size Lc_{100%SOC} of the graphite material in the 100% SOC lithium intercalation state along the c-axis direction is within the above range, the lattice expansion of the graphite material during battery charging can be further reduced, reducing the thickness expansion of the negative electrode plate, making it possible to further reduce the negative electrode-electrolyte solution interface side reactions, and reducing the irreversible consumption of lithium ions, which in turn can further improve the cycle life of the battery.

In some embodiments, a grain size La_{0%SOC} of the graphite material in the 0% SOC lithium intercalation state along an a-axis direction may be greater than 0 and less than or equal to 140 nm.

When the grain size La_{0%SOC} of the graphite material in the 0% SOC lithium intercalation state along the a-axis direction is within the above range, the graphite material has features of a high degree of isotropy and a small grain size, and therefore, the graphite material can have more lithium intercalation channels, making it possible to reduce the lithium deposition, which is conducive to improving the cycle life of the battery.

In some embodiments, a gravimetric capacity of the graphite material may be from 280 mAh/g to 340 mAh/g, and be optionally from 290 mAh/g to 335 mAh/g.

When the gravimetric capacity of the graphite material is within the above range, it is conducive to enabling the battery to have both a high energy density and a long cycle life.

In some embodiments, a degree of graphitization of the graphite material may be from 70% to 88%, and be optionally from 75% to 85%.

When the degree of graphitization of the graphite material is within the above range, on the one hand, the graphite material can have a high capacity, enabling the battery to have a high energy density. On the other hand, the grain size of the graphite material along the c-axis direction during lithium intercalation can be reduced, and therefore, the lattice expansion of the graphite material during battery charging can be reduced, reducing the thickness expansion of the negative electrode plate, making it possible to reduce the negative electrode-electrolyte solution interface side reactions, and reducing the irreversible consumption of lithium ions, which in turn can improve the cycle life of the battery.

In some embodiments, the graphite material is of a primary particle morphology.

In some embodiments, a volume distribution particle size Dv1 of the graphite material may be from 0.5 µm to 3.1 µm, and be optionally from 1 µm to 2.5 µm.

In some embodiments, a volume distribution particle size Dv10 of the graphite material may be from 3 µm to 6.2 µm, and be optionally from 3.2 µm to 5 µm.

In some embodiments, a volume distribution particle size Dv50 of the graphite material may be from 5 µm to 15 µm, and be optionally from 8 µm to 12 µm.

By adjusting the volume distribution particle size of the graphite material, the grain size of the graphite material along the c-axis direction during lithium intercalation can be reduced, and therefore, the lattice expansion of the graphite material during battery charging can be reduced, reducing the thickness expansion of the negative electrode plate, making it possible to reduce the negative electrode-electrolyte solution interface side reactions, and reducing the irreversible consumption of lithium ions, which in turn can improve the cycle life of the battery. It is also possible to increase lithium intercalation channels of the graphite material, thereby reducing lithium deposition.

In some embodiments, a particle size distribution (Dv90 - Dv10)/Dv50 of the graphite material may be from 1.02 to 1.57, and be optionally from 1.11 to 1.49.

When the particle size distribution (Dv90 - Dv10)/Dv50 of the graphite material is within the above range, the thickness expansion of the negative electrode plate during battery charging can be reduced, making it possible to reduce the negative electrode-electrolyte solution interface side reactions, and reducing the irreversible consumption of lithium ions, which in turn can improve the cycle life of the battery. When the particle size distribution (Dv90 - Dv10)/Dv50 of the graphite material is large, the graphite material has a high content of fine powder, which consequently increases an irreversible capacity loss during battery cycling, thereby reducing the cycle life of the battery. When the particle size distribution (Dv90 - Dv10)/Dv50 of the graphite material is small, repeated charging and discharging of graphite particles during battery cycling leads to repeated expansion and contraction of the graphite particles, and accordingly, some of the graphite particles may be displaced, resulting in an increase in a gap between the graphite particles. In addition, when the particle size distribution (Dv90 - Dv10)/Dv50 of the graphite material is small, the graphite material contains less fine powder, and accordingly, the graphite particles may be caused to be out of electrical contact due to the lack of fine powder to fill the gap between the graphite particles, resulting in a rapid cycle capacity fade at a late stage of use of the battery.

In some embodiments, a tap density of the graphite material may be from 1.0 m³/g to 1.3 m³/g.

When the tap density of the graphite material is within the above range, the compaction density of a negative electrode film layer can be increased, which is conducive to enabling the battery to have a high energy density.

In some embodiments, a specific surface area of the graphite material may be from 0.6 m²/g to 2 m²/g.

When the specific surface area of the graphite material is within the above range, the negative electrode-electrolyte solution interface side reactions can be reduced, reducing the irreversible consumption of lithium ions, which in turn can improve the cycle life of the battery.

In some embodiments, the graphite material may further include a carbon layer on a surface thereof. The carbon layer may include one or more of soft carbon or hard carbon.

The grain size Lc along the c-axis direction or the grain size La along the a-axis direction of the graphite material has a meaning well known in the art, and can be tested using an instrument and a method known in the art. For example, they can be tested using an X-ray diffractometer (e.g., Bruker D8 Discover), where the test may refer to JIS K 0131-1996 and JB/T 4220-2011, to obtain full widths at half maximum FWHM(002) and FWHM(110) of 002 and 110 crystal planes in a crystal structure of the graphite material and diffraction peaks Pos(002) and Pos(100) of the crystal planes, and then numerical values of Lc and La of the crystal may be calculated according to the Scherrer formula, where Π represents a constant of the ratio of circumference to diameter.
$Lc = 0.89 * 0.15405 * 180 / FWHM \left(002\right) / π / {Cos}_{\left[Pos\left(002\right)*π*2/180\right]} .$
$La = 1.84 * 0.15405 * 180 / FWHM \left(110\right) / π / {Cos}_{\left[Pos\left(110\right)*π*2/180\right]} .$

Lc_{0%SOC}, Lc_{50%SOC}, and Lc_{100%SOC} represent grain sizes of the graphite material in different lithium intercalation states along the c-axis direction, respectively, i.e., heights along the c-axis direction. Lc_{0%SOC}, Lc_{50%SOC}, and Lc_{100%SOC} all can be obtained by testing the graphite material in different lithium intercalation states through the above test method, respectively.

La_{0%SOC} represents the grain size of the graphite material in the 0% SOC lithium intercalation state along the a-axis direction. La_{0%SOC} can be obtained through the above test method.

During the test, the negative electrode plate containing the graphite material provided in embodiments of the present application may be made into a button battery. For example, the negative electrode plate containing the graphite material provided in embodiments of the present application may be assembled with a lithium metal sheet (used as a counter electrode) into a button battery.

An electrolyte solution of the button battery may be prepared by a method as follows: in an argon atmosphere glove box with a water content less than 10 ppm, mixing dimethyl carbonate (DMC), ethyl methyl carbonate (EMC), and ethylene carbonate (EC) at a mass ratio of 1:1:1 to obtain an organic solvent, and then dissolving LiPF₆ in the organic solvent to prepare an electrolyte solution with a concentration of 1.0 mol/L.

A separator of the button battery may be a polypropylene (PP) film; and a thickness thereof may be 12 µm.

An assembly process of the button battery may be a well-known technique in the art. For example, the assembling may start at a positive electrode case from the bottom up or may start at a negative electrode case from the bottom up, and the entire assembly process is performed in an argon atmosphere glove box with a water content less than 10 ppm.

At 25°C, the prepared button battery is left to stand for 6 hours, and discharged to 5.0 mV at a constant current of 0.15 mA; left to stand for 5 min, and then further discharged to 5.0 mV at a constant current of 50 µA; and then charged to 2 V at a constant current of 0.30 mA, in which case a charging capacity is denoted as C₀. Next, the negative electrode plate is detached from the button battery, and a test is performed through the X-ray diffractometer to obtain Lc_{0%SOC} and La_{0%SOC}.

At 25°C, the prepared button battery is left to stand for 6 hours, and discharged to 5.0 mV at a constant current of 0.15 mA; left to stand for 5 min, and then further discharged to 5.0 mV at a constant current of 50 µA; then charged to 2 V at a constant current of 0.30 mA, in which case a charging capacity is denoted as C₀; and then discharged at a constant current of 0.05C₀ for 10 h. Next, the negative electrode plate is detached from the button battery, and a test is performed through the X-ray diffractometer to obtain Lc_{50%SOC}.

At 25°C, the prepared button battery is left to stand for 6 hours, and discharged to 5.0 mV at a constant current of 0.15 mA; left to stand for 5 min, and then further discharged to 5.0 mV at a constant current of 50 µA; then charged to 2 V at a constant current of 0.30 mA, in which case a charging capacity is denoted as C₀; and then discharged at a constant current of 0.05C₀ for 20 h. Next, the negative electrode plate is detached from the button battery, and a test is performed through the X-ray diffractometer to obtain Lc_{100%SOC}.

For example, a graphite material sample, carbon black as a conductive agent, and polyvinylidene fluoride (PVDF) as a binder at a mass ratio of 91.6:1.8:6.6 may be sufficiently stirred and mixed in an appropriate amount of N-methylpyrrolidone (NMP) as a solvent, to form a homogeneous negative electrode slurry. The negative electrode slurry is evenly applied on the surface of negative electrode current collector copper foil, dried, and cold pressed. Next, a metal lithium sheet is used as a counter electrode, a polypropylene (PP) film is used as a separator, an electrolyte solution is injected, and a CR2430 button battery is assembled in a glove box protected under argon. An employed formulation of the electrolyte solution is as follows: mixing dimethyl carbonate (DMC), ethyl methyl carbonate (EMC), and ethylene carbonate (EC) at a mass ratio of 1:1:1 to obtain an organic solvent, and then dissolving LiPF₆ in the organic solvent to prepare an electrolyte solution with a concentration of 1.0 mol/L. A compaction density of the negative electrode plate may be from 1.3 g/cm³ to 1.5 g/cm³.

At 25°C, the prepared button battery is first discharged to 0.005 V at a constant current of 0.05C, then discharged to 0.005 V at a constant current of 10 µA, and left to stand for 5 min, to record a first-cycle discharging capacity of the button battery. Next, the prepared button battery is charged to 2.0 V at a constant current of 0.1C, to record a first-cycle charging capacity of the button battery. The ratio of the first-cycle charging capacity of the button battery to the mass of the graphite material sample is a gravimetric capacity of the graphite material.

The degree of graphitization of the graphite material has a meaning well known in the art, and can be tested using an instrument and a method known in the art. For example, it can be tested using an X-ray diffractometer (e.g., Bruker D8 Discover), where the test may refer to JIS K 0131-1996 and JB/T 4220-2011, to obtain an average interplanar spacing d₀₀₂ of the (002) crystal plane in the crystal structure of the graphite material, and then the degree of graphitization may be calculated according to a formula g = (0.344 - d₀₀₂)/(0.344 - 0.3354)×100%. In the above formula, d₀₀₂ is the average interplanar spacing of the (002) crystal plane in the crystal structure of the graphite material represented in nanometers (nm).

In an X-ray diffraction analysis test, a copper target may be used as an anode target, CuKα rays may be used as a radiation source, with a ray wavelength λ = 1.5418 Å, a scanning 2θ angle range may be from 15° to 75°, and a scanning rate may be 4 °/min.

The volume distribution particle sizes Dv1, Dv10, Dv50, and Dv90 of a material (e.g., the graphite material, the graphite precursor below, etc.) have meanings well known in the art, and represent corresponding particle sizes when the cumulative volume distribution percentage of the material reaches 1%, 10%, 50%, and 90%, respectively, which can be measured using an instrument and a method known in the art. For example, they can be readily measured with reference to GB/T 19077-2016, using a laser particle size analyzer. A test instrument may be a Mastersizer 3000 laser particle size analyzer from Malvern Instruments Ltd., UK.

The tap density of the graphite material has a meaning well known in the art, and can be measured using an instrument and a method known in the art. For example, it can be measured with reference to GB/T 5162-2006, using a powder tap density tester. The test instrument may be Dandong Bettersize BT-301.

The specific surface area of the graphite material has a meaning well known in the art, and can be measured using an instrument and a method known in the art. For example, it can be tested using a nitrogen-adsorption specific surface area analysis and test method with reference to GB/T 19587-2017, and then calculated using the Brunauer Emmett Teller (BET) method, where the nitrogen-adsorption specific surface area analysis and test may be performed through a Tri-Star 3020 specific surface area and pore size analysis tester from Micromeritics, USA.

The embodiments of the present application further provide a preparation method for the above graphite material.

The preparation method includes the following steps: providing a coke raw material; performing crushing treatment, shaping treatment, and classification treatment on the coke raw material to obtain a graphite precursor; and placing the obtained graphite precursor in a graphitization furnace to perform graphitization treatment at a preset temperature for preset time, cooling and then taking a product out of the furnace to obtain a graphite material, where the preset temperature is less than 3000°C, and the preset time is less than 24 h. The graphite material satisfies (Lc_{100%SOC} - Lc_{0%SOC})/Lc_{50%SOC} ≤ 0.0750 and Lc_{0%SOC} being less than or equal to 50 nm; Lc_{0%SOC} represents a grain size of the graphite material in a 0% SOC lithium intercalation state along a c-axis direction, in units of nm; Lc_{50%SOC} represents a grain size of the graphite material in a 50% SOC lithium intercalation state along the c-axis direction, in units of nm; Lc_{100%SOC} represents a grain size of the graphite material in a 100% SOC lithium intercalation state along the c-axis direction, in units of nm.

By selecting the preset temperature and the preset time of the graphitization treatment as being within the above ranges, the grain size of the graphite material crystal along the c-axis direction can be reduced, reducing volumetric expansion of the graphite material during battery charging, and making it possible to enable the graphite material to have a high gravimetric capacity.

When the preset temperature is high and/or the preset time is long during the graphitization treatment, the degree of grain growth is high, the grain size of the graphite material crystal along the c-axis direction is large, and the lattice expansion and volumetric expansion of the graphite material are large during battery charging, causing repeated fragmentation and generation of an SEI film, which is disadvantageous to improving the cycle life of the battery.

Therefore, the graphite material prepared by the preparation method provided by the embodiments of the present application has a small grain size along the c-axis direction. Moreover, a volumetric change of the graphite material during the entire lithium intercalation is small, and therefore, lattice expansion of the graphite material during battery charging can be reduced, reducing thickness expansion of a negative electrode plate, making it possible to reduce negative electrode-electrolyte solution interface side reactions, and reducing irreversible consumption of lithium ions, which in turn can improve the cycle life of the battery.

In some embodiments, when the obtained graphite precursor is placed in the graphitization furnace to perform the graphitization treatment at the preset temperature for the preset time, the preset temperature may be from 2500°C to 2800°C, and be optionally from 2500°C to 2750°C.

In some embodiments, when the obtained graphite precursor is placed in the graphitization furnace to perform the graphitization treatment at the preset temperature for the preset time, the preset time may be from 6 h to 18 h, and be optionally from 8 h to 15 h.

By further adjusting the preset temperature and/or the preset time of the graphitization treatment, on the one hand, the lattice expansion of the graphite material during battery charging can be reduced, reducing the thickness expansion of the negative electrode plate, reducing the negative electrode-electrolyte solution interface side reactions, reducing the irreversible consumption of lithium ions, and thereby improving the cycle life of the battery. On the other hand, the graphite material can have a high gravimetric capacity, which in turn can enable the battery to have both a long cycle life and a high energy density.

In some embodiments, cooling time may be less than or equal to 5 h. As such, the problem of surface oxidation of the graphite material can be reduced, improving the performance of the graphite material.

In some embodiments, a temperature of the product taken out of the furnace may be less than or equal to 250°C. As such, the problem of surface oxidation of the graphite material during transfer out of the furnace can be reduced, making it possible to improve the performance of the graphite material.

In some embodiments, the coke raw material may include at least one of petroleum coke or needle coke.

In the present application, the term "petroleum coke" refers to coke formed by high temperature carbonization of petroleum residual oil or petroleum pitch.

In the present application, the term "needle coke" refers to coke with a needle texture, which is produced by liquid-phase carbonization of coal tar pitch or petroleum pitch for forming anisotropic mesophase followed by processes such as high-temperature carbonization.

In some embodiments, the raw material may include petroleum coke. The petroleum coke has excellent anisotropy, facilitating the preparation of a graphite material with low volumetric expansion, which is conducive to enabling the battery to have a long cycle life. Moreover, the petroleum coke has high a compaction density and a high gravimetric capacity, which are conducive to improving the energy density of the battery. In addition, the petroleum coke is more widely available, which is conducive to industrial production.

The coke raw material generally includes at least one of a mosaic structure, a domain structure, and a fibrous structure. Generally, based on morphological features and sizes of isochromatic regions of the coke raw material under a polarizing microscope, a microstructure of an isochromatic region with a size less than 30 µm is determined as a mosaic structure, a microstructure of an isochromatic region with a size larger than 30 µm is determined as a domain structure, and an anisotropic stripe-shaped isochromatic region is determined as a fibrous structure.

In some embodiments, the coke raw material may be petroleum coke, and based on a structural total volume of the coke raw material, a volumetric proportion of mosaic and domain structures in the petroleum coke may be greater than or equal to 60%, and be optionally from 65% to 80%.

In some embodiments, the coke raw material may be needle coke, and based on a structural total volume of the coke raw material, a volumetric proportion of fibrous structures in the needle coke may be from 40% to 60%, and be optionally from 45% to 55%.

By selecting the above specific types of coke raw material, the rate of grain growth is slower under the same graphitization treatment condition, thereby facilitating adjusting the degree of grain growth during graphitization, and making it possible to reduce volumetric changes of prepared graphite particles during battery charging and discharging.

In the present application, volumetric proportions of the mosaic, domain, and fibrous structures in the coke raw material may be tested using a method known in the art. As an example, the raw material may be taken in accordance with GB 1997-89, the raw material crushed to 1 mm is mixed well, reduction is performed to result in 40 g to 50 g, and then 4 g to 5 g of specimen at a grade of 0.07 mm to 1.0 mm is sieved using a square-hole sieve for sheet preparation. Powder coke and block coke optical sheets are prepared in accordance with MT 116.1-86, where the powder coke optical sheet shall have a diameter not less than 22 mm, and a volumetric proportion of a cement shall be less than 1/3. The specimen is placed on a slide with cement, flattened, and then placed on a stage for focusing, and after the microscope is calibrated, a polarizer and an analyzer are adjusted as being orthogonal. An azurite check plate (1λ) is inserted to cause the field of view to present a first-order red interference color. A step size of a movable specimen holder is determined, to ensure that more than 400 effective test points are evenly distributed, with a point spacing from 0.3 mm to 0.5 mm and an appropriate line spacing generally from 0.5 mm to 0.8 mm. Starting from one end of the specimen, a category of a microstructure under a reticle intersection point is determined, and a quotient of the number of effective test points for an optical texture of each of the mosaic, domain, and fibrous structures divided by a counted total number of test points is used as a volumetric proportion of each structure in the raw material.

In some embodiments, the coke raw material may further satisfy: a volatile mass content is less than or equal to 10 wt%, an ash mass content is less than or equal to 0.3 wt%, and a sulfur mass content is less than or equal to 2 wt%.

In some embodiments, in the step of performing the crushing treatment on the coke raw material, a crusher, such as a jaw crusher, may be used to perform the crushing treatment on the coke raw material. For example, the coke raw material may be first crushed to 2 mm to 5 mm and then sieved with, for example, a 3 to 20-mesh sieve.

By performing the crushing treatment on the coke raw material, the grain size of the graphite material crystal along the c-axis direction can be reduced, reducing volumetric expansion of the graphite material during battery charging.

In some embodiments, in the step of performing the shaping treatment on the coke raw material, a shaper may be used to perform the shaping treatment on the crushed coke raw material. The shaping treatment can reduce burrs on the surface of the crushed coke raw material.

In some embodiments, in the step of performing the classification treatment on the coke raw material, an airflow classifier may be used to classify the shaped coke raw material. Optionally, an air induction frequency may be greater than or equal to 20 Hz, and a classification frequency may be greater than or equal to 60 Hz. The classification treatment can reduce the content of large particles and fine powder in the obtained graphite precursor.

In some embodiments, in the step of performing the crushing treatment, the shaping treatment, and the classification treatment on the coke raw material to obtain the graphite precursor, a volume distribution particle size Dv1 of the obtained graphite precursor may be greater than or equal to 0.3 µm, a volume distribution particle size Dv10 may be greater than or equal to 2.0 µm, a volume distribution particle size Dv50 may be from 5 µm to 16 µm, and a particle size distribution (Dv90 - Dv10)/Dv50 may be from 1.05 to 1.61.

Optionally, the volume distribution particle size Dv1 of the obtained graphite precursor may be from 0.3 µm to 1.7 µm, and be optionally from 0.3 µm to 1.4 µm.

Optionally, the volume distribution particle size Dv10 of the obtained graphite precursor may be from 2.1 µm to 4.5 µm, and be optionally from 2.1 µm to 4.0 µm.

Optionally, the volume distribution particle size Dv50 of the obtained graphite precursor may be from 8 µm to 11 µm.

Optionally, the particle size distribution (Dv90 - Dv10)/Dv50 of the obtained graphite precursor may be from 1.18 to 1.52.

By adjusting the volume particle size distribution of the graphite precursor as being within the above range, the grain size of the graphite material crystal along the c-axis direction can be reduced, reducing volumetric expansion of the graphite material during battery charging, and making it possible to enable the graphite material to have good kinetic performance.

In some embodiments, the graphitization furnace may be a continuous graphitization furnace.

In some embodiments, before placing the obtained graphite precursor in the graphitization furnace to perform the graphitization treatment at the preset temperature for the preset time, the preparation method further includes a step of: performing pre-carbonization treatment on the obtained graphite precursor.

Optionally, the obtained graphite precursor may be heated to a temperature from 600°C to 1100°C at a temperature rising rate from 1 °C/min to 5 °C/min and held at the temperature for 18 h to 24 h for the pre-carbonization treatment.

In some embodiments, the preparation method further includes a step of: after placing the obtained graphite precursor in the graphitization furnace to perform the graphitization treatment at the preset temperature for the preset time, performing sieving and demagnetization to obtain the graphite material.

The sieving can reduce the content of large particles and fine powder in a finished product of the graphite material, facilitating the adjustment of a particle size and a volume particle size distribution of the obtained finished product of the graphite material, and accordingly, the grain size of the graphite material crystal along the c-axis direction can be reduced, reducing volumetric expansion of the graphite material during battery charging. The demagnetization can reduce the content of magnetic impurities, which increase self-discharging of the battery and thus reduce the battery performance, in the obtained finished product of the graphite material.

In some embodiments, the preparation method may further include a step of: adding the graphite material obtained after the graphitization treatment and a coating agent into a high-speed fusion machine to perform fusion treatment, to obtain an intermediate; and then placing the intermediate in a carbonization furnace to perform carbonization treatment, to carbonize the coating agent and form a carbon layer on the surface of the graphite material.

Optionally, a frequency of the fusion treatment may be from 20 Hz to 40 Hz, and be optionally from 30 Hz to 38 Hz.

Optionally, time of the fusion treatment may be from 5 min to 15 min, and be optionally from 8 min to 12 min.

Optionally, the coating agent may include pitch.

Optionally, a softening point temperature of the pitch may be from 150°C to 300°C, and be optionally from 200°C to 250°C.

Optionally, a temperature of the carbonization treatment may be from 950°C to 1300°C, and be optionally from 1100°C to 1200°C.

Optionally, time of the carbonization treatment may be from 1 h to 5 h, and be optionally from 2 h to 3 h.

Optionally, the fusion treatment may be performed twice. No coating agent is added to the high-speed fusion machine in a first time of fusion treatment. The coating agent is added to the high-speed fusion machine in a second time of fusion treatment.

In some embodiments, the preparation method includes the following steps: providing the coke raw material, where the coke raw material includes petroleum coke, and based on the structural total volume of the coke raw material, the volumetric proportion of the mosaic and domain structures in the petroleum coke is greater than or equal to 60%, and is optionally from 65% to 80%; performing the crushing treatment, the shaping treatment, and the classification treatment on the coke raw material to obtain the graphite precursor, where the volume distribution particle size Dv1 of the obtained graphite precursor is greater than or equal to 0.3 µm and is optionally from 0.3 µm to 1.4 µm, the volume distribution particle size Dv10 of the obtained graphite precursor is greater than or equal to 2.0 µm and is optionally from 2.1 µm to 4.0 µm, the volume distribution particle size Dv50 of the obtained graphite precursor is from 5 µm to 16 µm and is optionally from 8 µm to 11 µm, and the particle size distribution (Dv90 - Dv10)/Dv50 of the obtained graphite precursor is from 1.05 to 1.61 and is optionally from 1.40 to 1.52. heating the obtained graphite precursor to the temperature from 600°C to 1100°C at the temperature rising rate from 1 °C/min to 5 °C/min and holing the temperature for 18 h to 24 h for the pre-carbonization treatment; placing the pre-carbonized material in the continuous graphitization furnace to perform the graphitization treatment at the preset temperature for the preset time, cooling and then taking the product out of the furnace to obtain a graphitized product, where the preset temperature is from 2500°C to 2800°C and is optionally from 2500°C to 2750°C, and the preset time is from 6 h to 18 h and is optionally from 8 h to 15 h; performing the sieving and demagnetization treatment on the obtained graphitized product, to obtain an intermediate product; adding the sieved and demagnetized intermediate product and the coating agent into the high-speed fusion machine to perform the fusion treatment, to obtain the intermediate, where the time of the fusion treatment is from 5 min to 15 min and is optionally from 8 min to 12 min, and the frequency of the fusion treatment is from 20 Hz to 40 Hz and is optionally from 30 Hz to 38 Hz; placing the intermediate resulting from the fusion treatment in the carbonization furnace to perform the carbonization treatment, where the carbonization temperature is from 950°C to 1300°C and is optionally from 1100°C to 1200°C, and the carbonization time is from 1 h to 5 h and is optionally from 2 h to 3 h; and then performing sieving, demagnetization, and batch mixing processes on a finished product, to obtain the final graphite material. The graphite material satisfies (Lc_{100%SOC} - Lc_{0%SOC})/Lc_{50%SOC} ≤ 0.0750 and Lc_{0%SOC} being less than or equal to 50 nm.

In some embodiments, the preparation method includes the following steps: providing the coke raw material, where the coke raw material includes needle coke, and based on the structural total volume of the coke raw material, the volumetric proportion of the fibrous structures in the needle coke is from 40% to 60%, and is optionally from 45% to 55%; performing the crushing treatment, the shaping treatment, and the classification treatment on the coke raw material to obtain the graphite precursor, where the volume distribution particle size Dv1 of the obtained graphite precursor is greater than or equal to 0.3 µm and is optionally from 0.3 µm to 1.4 µm, the volume distribution particle size Dv10 of the obtained graphite precursor is greater than or equal to 2.0 µm and is optionally from 2.1 µm to 4.0 µm, the volume distribution particle size Dv50 of the obtained graphite precursor is from 5 µm to 16 µm and is optionally from 8 µm to 11 µm, and the particle size distribution (Dv90 - Dv10)/Dv50 of the obtained graphite precursor is from 1.05 to 1.61 and is optionally from 1.18 to 1.40. heating the obtained graphite precursor to the temperature from 600°C to 1100°C at the temperature rising rate from 1 °C/min to 5 °C/min and holing the temperature for 18 h to 24 h for the pre-carbonization treatment; placing the pre-carbonized material in the continuous graphitization furnace to perform the graphitization treatment at the preset temperature for the preset time, cooling and then taking the product out of the furnace to obtain a graphitized product, where the preset temperature is from 2500°C to 2800°C and is optionally from 2500°C to 2750°C, and the preset time is from 6 h to 18 h and is optionally from 8 h to 15 h; performing the sieving and demagnetization treatment on the obtained graphitized product, to obtain an intermediate product; adding the sieved and demagnetized intermediate product and the coating agent into the high-speed fusion machine to perform the fusion treatment, to obtain the intermediate, where the time of the fusion treatment is from 5 min to 15 min and is optionally from 8 min to 12 min, and the frequency of the fusion treatment is from 20 Hz to 40 Hz and is optionally from 30 Hz to 38 Hz; placing the intermediate resulting from the fusion treatment in the carbonization furnace to perform the carbonization treatment, where the carbonization temperature is from 950°C to 1300°C and is optionally from 1100°C to 1200°C, and the carbonization time may be from 1 h to 5 h and be optionally from 2 h to 3 h; and performing sieving, demagnetization, and batch mixing processes on a finished product, to obtain the final graphite material. The graphite material satisfies (Lc_{100%SOC} - Lc_{0%SOC})/Lc_{50%SOC} ≤ 0.0750 and Lc_{0%SOC} being less than or equal to 50 nm.

### [Negative electrode plate]

The battery cell includes a negative electrode plate.

The negative electrode plate includes a negative electrode current collector and a negative electrode film layer disposed on at least one surface of the negative electrode current collector. For example, the negative electrode current collector has two surfaces opposite in a thickness direction thereof, and the negative electrode film layer is disposed on either one or both of the two opposite surfaces of the negative electrode current collector.

The negative electrode film layer includes a negative electrode active material. The negative electrode active material includes the graphite material described above or the graphite material obtained by the method described above.

In some embodiments, the negative electrode active material may further include other materials well known in the art. As an example, the other materials include, but are not limited to, one or more of natural graphite, soft carbon, hard carbon, silicon-based material, tin-based material, or lithium titanate.

In some embodiments, the negative electrode film layer further optionally includes a negative electrode conductive agent. As an example, the negative electrode conductive agent may include, but is not limited to, one or more of superconducting carbon, conductive graphite, acetylene black, carbon black, Ketjen black, carbon dot, carbon nanotube, graphene, or carbon nanofiber.

In some embodiments, the negative electrode film layer further optionally includes a negative electrode binder. As an example, the negative electrode binder may include, but is not limited to, one or more of styrene butadiene rubber (SBR), water-soluble unsaturated resin SR-1B, water-based acrylic resin (e.g., polyacrylic acid (PAA), polymethacrylic acid (PMAA), or sodium polyacrylate (PAAS)), polyacrylamide (PAM), polyvinyl alcohol (PVA), sodium alginate (SA), or carboxymethyl chitosan (CMCS).

In some embodiments, the negative electrode film layer further optionally includes other additives. As an example, the other additives may include, but are not limited to, a thickener, e.g., sodium carboxymethyl cellulose (CMC), a PTC thermistor material, etc.

In some embodiments, a compaction density of the negative electrode film layer may be from 1.15 g/cm³ to 1.55 g/cm³. The compaction density of the negative electrode film layer refers to a compaction density of the negative electrode film layer on one side of the negative electrode collector.

In some embodiments, an areal density of the negative electrode film layer may be from 7 mg/cm² to 15 mg/cm². The areal density of the negative electrode film layer refers to an areal density of the negative electrode film layer on one side of the negative electrode collector.

The areal density of the negative electrode film layer has a meaning well known in the art, and can be tested using a method known in the art. For example, a single-face coated and cold-pressed negative electrode plate (a double-face coated negative electrode plate is also usable after wiping off the negative electrode film layer on one face thereof) is punch-cut into a small wafer with an area of S₁, the weight of which is measured and denoted as M₁. Then, the negative electrode film layer of the weighed negative electrode plate is wiped off; and the weight of the negative electrode current collector is measured and denoted as M₀. The areal density of the negative electrode film layer = (M1 - M0)/S1.

The compaction density of the negative electrode film layer has a meaning well known in the art, and can be tested using a method known in the art. Compaction density of the negative electrode film layer = areal density of negative electrode film layer/thickness of negative electrode film layer. The thickness of the negative electrode film layer has a meaning well known in the art, and can be tested using a method known in the art, for example, using a micrometer.

The negative electrode film layer is generally formed by applying a negative electrode slurry on the negative electrode current collector, followed by drying and cold pressing. The negative electrode slurry is generally formed by dispersing the negative electrode active material, an optional conductive agent, an optional binder, and other optional additives in a solvent and stirring the mixture well. The solvent may be N-methylpyrrolidone (NMP) or deionized water, but is not limited thereto.

The negative electrode plate does not exclude other additional functional layers than the negative electrode film layer. For example, in some embodiments, the negative electrode plate may further include a conductive priming coat (e.g., composed of a conductive agent and a binder) sandwiched between the negative electrode current collector and the negative electrode film layer and disposed on the surface of the negative electrode current collector. In some embodiments, the negative electrode plate may further include a protective layer covering a surface of the negative electrode film layer.

In some embodiments, the negative electrode current collector may include metal foil, a three-dimensional porous current collector, or a composite current collector. As an example of the metal foil, copper foil, copper alloy foil, nickel foil, nickel alloy foil, aluminum foil, or aluminum alloy foil may be used. As an example of the three-dimensional porous current collector, a copper mesh, nickel mesh, copper foam, nickel foam, or aluminum foam may be used. The composite current collector may include a polymer material base layer and a metal material layer formed on at least one surface of the polymer material base layer. As an example, the metal material may include, but is not limited to, one or more of copper, copper alloy, nickel, nickel alloy, titanium, titanium alloy, aluminum, aluminum alloy, silver, or silver alloy. As an example, the polymer material base layer may include, but is not limited to, one or more of polypropylene (PP), polyethylene terephthalate (PET), polybutylene terephthalate (PBT), polystyrene (PS), or polyethylene (PE).

### [Positive electrode plate]

The battery cell includes a positive electrode plate.

The positive electrode plate includes a positive electrode current collector and a positive electrode film layer disposed on at least one surface of the positive electrode current collector. For example, the positive electrode current collector has two surfaces opposite in a thickness direction thereof, and the positive electrode film layer is disposed on either or both of the two opposite surfaces of the positive electrode current collector.

The positive electrode film layer includes a positive electrode active material. For example, the positive electrode active material may include, but is not limited to, one or more of lithium transition metal oxide, lithium-containing phosphate, or respective modified compounds thereof.

In some embodiments, the positive electrode active material may include one or more of lithium-containing phosphate or modified compounds thereof. As such, the cycle life of the battery can be further improved.

As an example, the lithium transition metal oxide may include, but is not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, or respective modified compounds thereof.

As an example, the lithium-containing phosphate may include, but is not limited to, one or more of lithium iron phosphate, a composite of lithium iron phosphate and carbon, lithium manganese phosphate, a composite of lithium manganese phosphate and carbon, lithium manganese iron phosphate, a composite of lithium manganese iron phosphate and carbon, or respective modified compounds thereof. In the present application, the various modified compounds of the positive electrode active material described above may be obtained by doping modification or surface coating modification of the positive electrode active material.

In some embodiments, the positive electrode film layer further optionally includes a positive electrode conductive agent. As an example, the positive electrode conductive agent may include, but is not limited to, one or more of superconducting carbon, conductive graphite, acetylene black, carbon black, Ketjen black, carbon dot, carbon nanotube, graphene, or carbon nanofiber.

In some embodiments, the positive electrode film layer further optionally includes a positive electrode binder. As an example, the positive electrode binder may include, but is not limited to, one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, fluorine-containing acrylic resin, styrene butadiene rubber (SBR), water-soluble unsaturated resin SR-1B, water-based acrylic resin (e.g., polyacrylic acid (PAA), polymethacrylic acid (PMAA), or sodium polyacrylate (PAAS)), polyacrylamide (PAM), polyvinyl alcohol (PVA), sodium alginate (SA), or carboxymethyl chitosan (CMCS).

In some embodiments, the positive electrode current collector may be metal foil or a composite current collector. As an example of the metal foil, aluminum foil may be used. The composite current collector may include a polymer material base layer and a metal material layer formed on at least one surface of the polymer material base layer. As an example, the metal material may include, but is not limited to, one or more of aluminum, aluminum alloy, nickel, nickel alloy, titanium, titanium alloy, silver, or silver alloy. As an example, the polymer material base layer may include, but is not limited to, one or more of polypropylene (PP), polyethylene terephthalate (PET), polybutylene terephthalate (PBT), polystyrene (PS), or polyethylene (PE).

The positive electrode film layer is generally formed by applying a positive electrode slurry on the positive electrode current collector, followed by drying and cold pressing. The positive electrode slurry is generally formed by dispersing the positive electrode active material, an optional conductive agent, an optional binder, and any other components in a solvent and stirring the mixture well. The solvent may be N-methylpyrrolidone (NMP), but is not limited thereto.

### [Electrolyte]

The battery cell includes an electrolyte. The type of the electrolyte is not specifically limited in the present application, and may be selected as needed. For example, the electrolyte may include one or more of a solid electrolyte or a liquid electrolyte (i.e., electrolyte solution).

In some embodiments, the electrolyte is an electrolyte solution including an electrolyte salt and a solvent.

In some embodiments, as an example, the electrolyte salt may include, but is not limited to, one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis-trifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluorodioxalate phosphate (LiDFOP), or lithium tetrafluorooxalate phosphate (LiTFOP).

In some embodiments, the solvent may include, but is not limited to, one or more of an ester solvent, a sulfone solvent, or an ether solvent. As an example, the solvent may include, but is not limited to, one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate, methyl butyrate (MB), ethyl butyrate (EB), 1,4-butyrolactone (GBL), sulfolane (SF), methyl sulfonyl methane (MSM), ethyl methyl sulfone (EMS), or ethyl sulfonyl ethane (ESE).

In some embodiments, the electrolyte solution further optionally includes an additive. For example, the additive may include a negative electrode film-forming additive or a positive electrode film-forming additive, and may further include an additive capable of improving some performance of a battery, such as an additive that improves overcharge performance of the battery, an additive that improves high-temperature performance of the battery, or an additive that improves low-temperature power performance of the battery. Optionally, the additive may include one or more of vinylidene carbonate or fluoroethylene carbonate (FEC). Optionally, the mass of the additive does not exceed 5% of the total mass of the electrolyte solution.

### [Separator]

The battery cell using an electrolyte solution and some battery cells using a solid electrolyte further include a separator. The separator is disposed between the positive electrode plate and the negative electrode plate, and primarily has a function of preventing an internal short circuit.

The type of the separator is not specifically limited in the present application, and may be any well-known separator with good chemical stability, good mechanical stability, and a porous structure.

In some embodiments, the material of the separator may include, but is not limited to, one or more of glass fiber, non-woven cloth, polyethylene (PE), polypropylene (PP), or polyvinylidene fluoride. The separator may be a single-layer thin film or a multilayer composite thin film. When the separator is a multilayer composite thin film, materials of all the layers are the same or different.

A preparation method for the battery cell is well known. In some embodiments, the positive electrode plate, the separator, the negative electrode plate, and the electrolyte solution may be assembled to form a battery cell. As an example, the positive electrode plate, the separator, and the negative electrode plate may be made into an electrode assembly by a winding process or a laminating process. The electrode assembly is placed in an outer package, and oven dried, then the electrolyte solution is injected, and the battery cell is obtained through processes such as packaging, standing, and formation. A plurality of battery cells may be further connected in series, in parallel, or in parallel-series to form a battery module. A plurality of battery modules may also be connected in series, in parallel, or in parallel-series to form a battery pack. In some embodiments, a plurality of battery cells may alternatively directly form a battery pack.

### [Power consuming apparatus]

The embodiments of the present application further provide a power consuming apparatus including the battery provided in the embodiments of the present application, where the battery is used for providing electrical energy. The battery may be used as a power source of the power consuming apparatus, or may be used as an energy storage unit of the power consuming apparatus. The power consuming apparatus may include, but is not limited to, a mobile apparatus (e.g., a cell phone, a tablet computer, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like.

The specific type of the battery of the power consuming apparatus may be selected according to a use need, for example, a battery cell, a battery module, or a battery pack.

FIG. 6 is a schematic diagram of a power consuming apparatus as an example. The power consuming apparatus is a pure electric vehicle, a hybrid electric vehicle, a plug-in hybrid electric vehicle, or the like. To meet the requirements of the power consuming apparatus for high power and high energy density, a battery pack or a battery module may be used.

The power consuming apparatus as another example may be a mobile phone, a tablet computer, a notebook computer, or the like. The power consuming apparatus usually needs to be light and thin, and may use a battery cell as a power source.

### Examples

Content disclosed in the present application is described in detail in the following examples. These examples are only for illustrative purposes because various modifications and changes made without departing from the scope of the content disclosed in the present application are apparent to persons skilled in the art. Unless otherwise stated, all parts, percentages, and ratios of the following examples are based on weight, all reagents used in the examples are commercially available or synthesized according to conventional methods and can be directly used without further treatment, and all instruments used in the examples are commercially available.

### Example 1

### (1) Preparation of a negative electrode active material

A petroleum coke raw material was provided, where a volatile mass content was less than or equal to 10 wt%, an ash mass content was less than or equal to 0.3 wt%, and a sulfur mass content was less than or equal to 2 wt%, and the following was satisfied: a volumetric proportion of mosaic and domain structures being 69%.

The above petroleum coke raw material was coarsely crushed, then the coarsely crushed material was crushed and sieved, and shaping and classification treatment was performed on the sieved material, where a specific content of fine powder was removed during the classification treatment to obtain a precursor, a classification frequency of an airflow classifier was 60 Hz, and an air induction frequency was 20 Hz. A volume distribution particle size Dv1 of the obtained precursor was controlled as being 0.3 µm, a volume distribution particle size Dv10 was controlled as being 2.1 µm, a volume distribution particle size Dv50 was controlled as being 8.5 µm, and a particle size distribution (Dv90 - Dv10)/Dv50 was controlled as being 1.52, followed by pre-carbonization treatment, where the obtained precursor was heated to a temperature of 950°C at a temperature rising rate of 5 °C/min and held at the temperature for 20 h during the pre-carbonization treatment. Next, continuous graphitization treatment was performed on the pre-carbonized material at 2500°C for 12h, to obtain a graphitized product. Sieving and demagnetization treatment was performed on the obtained graphitized product, to obtain an intermediate product. A first time of fusion treatment was performed on the intermediate product in a high-speed fusion machine, and then pitch was added to perform a second time of fusion treatment, where a frequency of the fusion treatment was 34 Hz, time of each time of fusion treatment was 8 min, and a mass ratio of the intermediate product to the pitch was 98:2. The material resulting from the fusion treatment was transferred into a carbonization furnace to perform carbonization treatment at 1150 °C, where time of the carbonization treatment was 2 h. Finally, sieving, demagnetization, and batch mixing processes were performed on a finished product, to obtain the graphite material. The graphite material is a primary-particle graphite material with a volume distribution particle size Dv1 of 1.1 µm, a volume distribution particle size Dv10 of 4.3 µm, a volume distribution particle size Dv50 of 9.5 µm, and a particle size distribution (Dv90 - Dv10)/Dv50 of 1.49, and the graphite material satisfies (Lc_{100%SOC} - Lc_{0%SOC})/Lc_{50%SOC} being 0.0169.

### (2) Preparation of a negative electrode plate

The above graphite material, Super P as a conductive agent, CMC as a thickener, and SBR as a binder were mixed at a mass ratio of 96:1:1.2:1.8, deionized water as a solvent was added, and then the mixture was stirred under the action of a vacuum mixer until the system is homogeneous, to obtain a negative electrode slurry. The negative electrode slurry was evenly applied on negative electrode current collector copper foil, then dried, cold pressed, and cut to obtain the negative electrode plate. A negative electrode film layer has a compaction density of 1.30 g/cm³ and an areal density of 10.22 mg/cm².

### (3) Preparation of a positive electrode plate

Lithium iron phosphate as a positive electrode active material, Super P as a conductive agent, and PVDF as a binder were mixed at a mass ratio of 97:1:2, N-methylpyrrolidone (NMP) as a solvent was added, and then the mixture was stirred under the action of a vacuum mixer until the system is homogeneous, to obtain a positive electrode slurry. The positive electrode slurry was evenly applied on positive electrode current collector aluminum foil, then dried, cold pressed, and cut to obtain the positive electrode plate. A positive electrode film layer has a compaction density of 2.50 g/cm³ and an areal density of 19.51 mg/cm².

### (4) Preparation of an electrolyte solution

In an argon atmosphere glove box with a water content less than 10 ppm, dimethyl carbonate (DMC), ethyl methyl carbonate (EMC), and ethylene carbonate (EC) were mixed at a mass ratio of 1:1:1 to obtain an organic solvent, then LiPF₆ was dissolved in the organic solvent to prepare a solution with a concentration of 1.0 mol/L, and finally, vinylidene carbonate was added to the solution, with a mass content of 2 wt% based on a total mass of the electrolyte solution.

### (5) Preparation of a separator

A polypropylene film was used as a separator.

### (6) Preparation of a battery (full battery)

The above positive electrode plate, the separator, and the negative electrode plate were stacked in sequence, with the separator being located between the positive electrode plate and the negative electrode plate to achieve the function of isolation, and then wound to obtain an electrode assembly. The electrode assembly was placed in an outer package and dried, then the electrolyte solution was injected, and processes such as vacuum packaging, standing, formation, and shaping were performed to obtain the battery.

### (7) Preparation of a button battery

A lithium metal sheet is used as a counter electrode, and assembled with the prepared negative electrode plate, separator, and electrolyte solution into the button battery.

### Examples 2 to 5 and Comparative Examples 1 to 3

The battery preparation processes are the same as that of Example 1, except that the negative electrode active material preparation processes are different, referring to Table 1 for details of specific parameters.

**Table 1**

| Numbering | Coke raw material | | Graphite precursor parameters | | | | Graphitization treatment | | Graphite material parameters | | | |
|---|---|---|---|---|---|---|---|---|---|---|---|---|
| | Type | Volumetric proportion of mosaic and domain structures | (Dv90 - Dv10)/ Dv50 | Dv1 (µm) | Dv10 (µm) | Dv50 (µm) | Temperature (°C) | Time (h) | Dv1 (µm) | Dv10 (µm) | Dv50 (µm) | (Dv90 - Dv10)/ Dv50 |
| Example 1 | Petroleum coke | 69% | 1.52 | 0.3 | 2.1 | 8.5 | 2500 | 12 | 1.1 | 4.3 | 9.5 | 1.49 |
| Example 2 | Petroleum coke | 69% | 1.44 | 0.6 | 2.2 | 9.0 | 2600 | 12 | 1.3 | 3.2 | 9.7 | 1.42 |
| Example 3 | Petroleum coke | 69% | 1.42 | 1.0 | 3.2 | 9.3 | 2750 | 12 | 1.5 | 3.6 | 9.0 | 1.40 |
| Example 4 | Petroleum coke | 69% | 1.45 | 1.5 | 4.2 | 9.1 | 2990 | 12 | 2.2 | 4.0 | 8.9 | 1.33 |
| Example 5 | Petroleum coke | 69% | 1.18 | 1.7 | 4.5 | 9.4 | 2990 | 12 | 3.1 | 5.9 | 9.2 | 1.09 |
| Comparative Example 1 | Petroleum coke | 69% | 1.64 | 0.4 | 2.2 | 8.9 | 3200 | 12 | 0.7 | 2.8 | 8.6 | 1.62 |
| Comparative Example 2 | Petroleum coke | 51% | 1.48 | 1.1 | 3.2 | 9.6 | 2990 | 12 | 2.1 | 3.5 | 9.8 | 1.33 |
| Comparative Example 3 | Petroleum coke | 69% | 2.20 | 0.2 | 1.9 | 8.0 | 2990 | 60 | 0.3 | 2.5 | 8.2 | 2.10 |

### Example 6

The battery preparation process is the same as that of Example 1, except that the negative electrode active material preparation process is different.

### (1) Preparation of a negative electrode active material

A needle coke raw material was provided, where a volatile mass content was less than or equal to 10 wt%, an ash mass content was less than or equal to 0.3 wt%, and a sulfur mass content was less than or equal to 2 wt%, and the following was satisfied: a volumetric proportion of fibrous structures being 53%.

The needle coke raw material was coarsely crushed to 2 mm to 5 mm and then sieved with a 3 to 20-mesh sieve. Small particles resulting from coarse crushing were oven-dried until a moisture content is less than 0.5%, and then ball mill crushing, shaping, and classification treatment was performed on the small particles of needle coke, where a specific content of fine powder was removed during the classification treatment to obtain a precursor, a classification frequency of an airflow classifier was 60 Hz, and an air induction frequency was 20 Hz. A volume distribution particle size Dv1 of the obtained precursor was controlled as being 0.4 µm, a volume distribution particle size Dv10 was controlled as being 2.8 µm, a volume distribution particle size Dv50 was controlled as being 8.2 µm, and a particle size distribution (Dv90 - Dv10)/Dv50 was controlled as being 1.34, followed by pre-carbonization treatment, where the obtained precursor was heated to a temperature of 950°C at a temperature rising rate of 5 °C/min and held at the temperature for 2 h during the pre-carbonization treatment. Next, continuous graphitization treatment was performed on the pre-carbonized material at 2650°C for 12h, to obtain a graphitized product. Sieving and demagnetization treatment was performed on the obtained graphitized product, to obtain an intermediate product. A first time of fusion treatment was performed on the intermediate product in a high-speed fusion machine, and then pitch was added to perform a second time of fusion treatment, where a frequency of the fusion treatment was 34 Hz, time of each time of fusion treatment was 8 min, and a mass ratio of the intermediate product to the pitch was 98:2. The material resulting from the fusion treatment was transferred into a carbonization furnace to perform carbonization treatment at 1150°C, where time of the carbonization treatment was 2 h. Finally, sieving, demagnetization, and batch mixing processes were performed on a finished product, to obtain the graphite material. The graphite material is a primary-particle graphite material with a volume distribution particle size Dv1 of 1.5 µm, a volume distribution particle size Dv10 of 4.0 µm, a volume distribution particle size Dv50 of 9.2 µm, and a particle size distribution (Dv90 - Dv10)/Dv50 of 1.27, and the graphite material satisfies (Lc_{100%SOC} - Lc_{0%SOC})/Lc_{50%SOC} being 0.0195.

### Example 7 and Comparative Example 4

The battery preparation processes are the same as that of Example 6, except that the negative electrode active material preparation processes are different, referring to Table 2 for details of specific parameters.

**Table 2**

| Numbering | Coke raw material | | Graphite precursor parameters | | | | Graphitization treatment | | Graphite material parameters | | | |
|---|---|---|---|---|---|---|---|---|---|---|---|---|
| | Type | Volumetric proportion of fibrous structures | (Dv90 Dv10)/- Dv50 | Dv1 (µm) | Dv10 (µm) | Dv50 (µm) | Temperature (°C) | Time (h) | Dv1 (µm) | Dv10 (µm) | Dv50 (µm) | (Dv90 - Dv10)/ Dv50 |
| Example 6 | Needle coke | 53% | 1.34 | 0.4 | 2.8 | 8.2 | 2650 | 12 | 1.5 | 4.0 | 9.2 | 1.27 |
| Example 7 | Needle coke | 53% | 1.18 | 0.35 | 2.3 | 8.6 | 2650 | 12 | 2.4 | 4.6 | 9.5 | 1.11 |
| Comparative Example 4 | Needle coke | 66% | 1.32 | 1.5 | 3.5 | 8.8 | 3100 | 12 | 2.1 | 4.4 | 8.4 | 1.28 |

### Test Section

### (1) Test for gravimetric capacity of the graphite material

A negative electrode active material sample prepared in each of the Examples and Comparative Examples, carbon black as a conductive agent, and polyvinylidene fluoride (PVDF) as a binder at a mass ratio of 91.6:1.8:6.6 were sufficiently stirred and mixed in an appropriate amount of N-methylpyrrolidone (NMP) as a solvent, to form a homogeneous negative electrode slurry. The negative electrode slurry was evenly applied on the surface of negative electrode current collector copper foil, dried in an oven, and then pressed to a compaction density from 1.3 g/cm³ to 1.5 g/cm³ using a roller cold press machine for later use. Dimethyl carbonate (DMC), ethyl methyl carbonate (EMC), and ethylene carbonate (EC) at a mass ratio of 1:1:1 were mixed to obtain an organic solvent, and then LiPF₆ was dissolved in the organic solvent to prepare an electrolyte solution with a concentration of 1.0 mol/L. Next, a metal lithium sheet was used as a counter electrode, a polypropylene film was used as a separator, and a CR2430 button battery was assembled in a glove box protected under argon.

At 25°C, the prepared button battery was first discharged to 0.005 V at a constant current of 0.05C, then discharged to 0.005 V at a constant current of 10 µA, and left to stand for 5 min, to record a first-cycle discharging capacity of the button battery. Next, the prepared button battery was charged to 2.0 V at a constant current of 0.1C, to record a first-cycle charging capacity of the button battery. The ratio of the first-cycle charging capacity of the button battery to the mass of the negative electrode active material sample is a gravimetric capacity of the negative electrode active material (i.e., the graphite material).

### (2) Test of Lc_{0%SOC}, Lc_{50%SOC}, Lc_{100%SOC}, and La_{0%SOC}

At 25°C, the button battery prepared in the above test was left to stand for 6 hours, and discharged to 5.0 mV at a constant current of 0.15 mA; left to stand for 5 min, and then further discharged to 5.0 mV at a constant current of 50 µA; and then charged to 2 V at a constant current of 0.30 mA, in which case a charging capacity is denoted as C₀. Next, the negative electrode plate was detached from the button battery, a test was performed through the X-ray diffractometer, and Lc_{0%SOC} and La_{0%SOC} were calculated according to the Scherrer formula.

At 25°C, the button battery prepared in the above test was left to stand for 6 hours, and discharged to 5.0 mV at a constant current of 0.15 mA; left to stand for 5 min, and then further discharged to 5.0 mV at a constant current of 50 µA; then charged to 2 V at a constant current of 0.30 mA, in which case a charging capacity is denoted as C₀; and then discharged at a constant current of 0.05C₀ for 10 h. Next, the negative electrode plate was detached from the button battery, a test was performed through the X-ray diffractometer, and Lc_{50%SOC} was calculated according to the Scherrer formula.

At 25°C, the button battery prepared in the above test was left to stand for 6 hours, and discharged to 5.0 mV at a constant current of 0.15 mA; left to stand for 5 min, and then further discharged to 5.0 mV at a constant current of 50 µA; then charged to 2 V at a constant current of 0.30 mA, in which case a charging capacity is denoted as C₀; and then discharged at a constant current of 0.05C₀ for 20 h. Next, the negative electrode plate was detached from the button battery, a test was performed through the X-ray diffractometer, and Lc_{100%SOC} was calculated according to the Scherrer formula.

### (3) Test for cycle performance of the battery

At 60°C, the prepared full battery was charged to 3.65 V at a 1C constant current and discharged to 2.5 V at a 1C constant current to perform a cyclic charging and discharging test, and the test was stopped when a discharging capacity of the full battery decayed to 80% of the first-cycle discharging capacity, in which case the number of cycles of the full battery was recorded. The greater the number of cycles of the full battery, the better the cycle stability of the full battery.

The test results are shown in Table 3 and Table 4.

**Table 3**

| Numbering | Graphite material | | | | | Full battery |
|---|---|---|---|---|---|---|
| | Lc_{0%SOC} (nm) | Lc_{50%SOC} (nm) | Lc_{100%SOC} (nm) | (Lc_{100%SOC} - Lc_{0%SOC})/Lc_{50%SOC} | Gravimetric capacity (mAh/g) | Number of cycles |
| Example 1 | 29.4 | 29.6 | 29.9 | 0.0169 | 301.5 | 3232 |
| Example 2 | 32.0 | 32.2 | 32.5 | 0.0155 | 308.2 | 3056 |
| Example 3 | 38.7 | 39.8 | 40.4 | 0.0427 | 329.8 | 2811 |
| Example 4 | 46.8 | 48.2 | 50.3 | 0.0726 | 343.5 | 2073 |
| Example 5 | 46.6 | 48.5 | 50.2 | 0.0742 | 345.5 | 1811 |
| Comparative Example 1 | 47.9 | 55.5 | 53.6 | 0.1027 | 351.2 | 1533 |
| Comparative Example 2 | 48.1 | 52.9 | 53.7 | 0.1059 | 348.6 | 1588 |
| Comparative Example 3 | 47.1 | 48.7 | 51.0 | 0.0801 | 349.3 | 1675 |

**Table 4**

| Numbering | Graphite material | | | | | Full battery |
|---|---|---|---|---|---|---|
| | Lc_{0%SOC} (nm) | Lc_{50%SOC} (nm) | Lc_{100%SOC} (nm) | (Lc_{100%SOC} - Lc_{0%SOC})/Lc_{50%SOC} | Gravimetric capacity (mAh/g) | Number of cycles |
| Example 6 | 35.4 | 35.9 | 36.1 | 0.0195 | 319.5 | 2898 |
| Example 7 | 35.1 | 35.6 | 35.6 | 0.0140 | 321.3 | 3011 |
| Comparative Example 4 | 52.1 | 54.7 | 56.8 | 0.0859 | 351.1 | 1592 |

It can be seen from the test results in Table 3 and Table 4 that, the graphite material satisfies (Lc_{100%SOC} - Lc_{0%SOC})/Lc_{50%SOC} ≤ 0.0750 and Lc_{0%SOC} being less than or equal to 50 nm has excellent cycle performance. This is due to a small volumetric change of the graphite material during the entire lithium intercalation, and therefore, lattice expansion of the graphite material during battery charging can be reduced, reducing thickness expansion of a negative electrode plate, making it possible to reduce negative electrode-electrolyte solution interface side reactions, and reducing irreversible consumption of lithium ions, which in turn can improve the cycle life of the battery and is conducive to satisfying the needs of long-life energy storage batteries.

It should be noted that, the present application is not limited to the above embodiments. The above embodiments are merely examples, and embodiments having substantially the same technical idea and the same effects within the scope of the technical solutions of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A graphite material, wherein the graphite material satisfies (Lc_{100%SOC} - Lc_{0%SOC})/Lc_{50%SOC} ≤ 0.0750 and Lc_{0%SOC} being less than or equal to 50 nm;
Lc_{0%SOC} represents a grain size of the graphite material in a 0% SOC lithium intercalation state along a c-axis direction, in units of nm; Lc_{50%SOC} represents a grain size of the graphite material in a 50% SOC lithium intercalation state along the c-axis direction, in units of nm; Lc_{100%SOC} represents a grain size of the graphite material in a 100% SOC lithium intercalation state along the c-axis direction, in units of nm.

2. The graphite material according to claim 1, wherein
0.0100 ≤ (Lc_{100%SOC} - Lc_{0%SOC})/Lc_{50%SOC} ≤ 0.0750, and optionally, 0.0100 ≤ (Lc_{100%SOC} - Lc_{0%SOC})/Lc_{50%SOC} ≤ 0.0500; and/or
15 nm ≤ Lc_{0%SOC} ≤ 47 nm, and optionally, 25 nm ≤ Lc_{0%SOC} ≤ 45 nm.

3. The graphite material according to claim 1 or 2, wherein 20 nm ≤ Lc_{100%SOC} ≤ 60 nm, and optionally, 28 nm ≤ Lc_{100%SOC} ≤50 nm.

4. The graphite material according to any one of claims 1 to 3, wherein a gravimetric capacity of the graphite material is from 280 mAh/g to 340 mAh/g, and is optionally from 290 mAh/g to 335 mAh/g.

5. The graphite material according to any one of claims 1 to 4, wherein
a volume distribution particle size Dv1 of the graphite material is from 0.5 µm to 3.1 µm, and is optionally from 1 µm to 2.5 µm; and/or
a volume distribution particle size Dv10 of the graphite material is from 3 µm to 6.2 µm, and is optionally from 3.2 µm to 5 µm; and/or
a volume distribution particle size Dv50 of the graphite material is from 5 µm to 15 µm, and is optionally from 8 µm to 12 µm; and/or
a particle size distribution (Dv90 - Dv10)/Dv50 of the graphite material is from 1.02 to 1.57, and is optionally from 1.11 to 1.49.

6. The graphite material according to any one of claims 1 to 5, wherein a grain size La_{0%SOC} of the graphite material in the 0% SOC lithium intercalation state along an a-axis direction is less than or equal to 140 nm.

7. The graphite material according to any one of claims 1 to 6, wherein a degree of graphitization of the graphite material is from 70% to 88%, and is optionally from 75% to 85%.

8. The graphite material according to any one of claims 1 to 7, wherein
a tap density of the graphite material is from 1.0 m³/g to 1.3 m³/g; and/or a specific surface area of the graphite material is from 0.6 m²/g to 2 m²/g.

9. The graphite material according to any one of claims 1 to 8, wherein the graphite material further comprises a carbon layer on a surface thereof.

10. A preparation method for a graphite material, comprising the following steps:
providing a coke raw material;
performing crushing treatment, shaping treatment, and classification treatment on the coke raw material to obtain a graphite precursor; and
placing the obtained graphite precursor in a graphitization furnace to perform graphitization treatment at a preset temperature for preset time, cooling and then taking a product out of the furnace to obtain a graphite material, wherein the preset temperature is less than 3000°C, and the preset time is less than 24 h,
wherein the graphite material satisfies (Lc_{100%SOC} - Lc_{0%SOC})/Lc_{50%SOC} ≤ 0.0750 and Lc_{0%SOC} being less than or equal to 50 nm; Lc_{0%SOC} represents a grain size of the graphite material in a 0% SOC lithium intercalation state along a c-axis direction, in units of nm; Lc_{50%SOC} represents a grain size of the graphite material in the 50% SOC lithium intercalation state along a c-axis direction, in units of nm; Lc_{100%SOC} represents a grain size of the graphite material in a 100% SOC lithium intercalation state along the c-axis direction, in units of nm.

11. The preparation method according to claim 10, wherein
the graphitization furnace is a continuous graphitization furnace; and/or
the preset temperature is from 2500°C to 2800°C, and is optionally from 2500°C to 2750°C; and/or
the preset time is from 6 h to 18 h, and is optionally from 8 h to 15 h.

12. The preparation method according to claim 10 or 11, wherein the coke raw material comprises at least one of petroleum coke or needle coke;
optionally, the coke raw material further satisfies: a volatile mass content is less than or equal to 10 wt%, an ash mass content is less than or equal to 0.3 wt%, and a sulfur mass content is less than or equal to 2 wt%.

13. The preparation method according to claim 12, wherein
the coke raw material is petroleum coke, and based on a structural total volume of the coke raw material, a volumetric proportion of mosaic and domain structures in the petroleum coke is greater than or equal to 60%, and is optionally from 65% to 80%; or
the coke raw material is needle coke, and based on a structural total volume of the coke raw material, a volumetric proportion of fibrous structures in the needle coke is from 40% to 60%, and is optionally from 45% to 55%.

14. The preparation method according to any one of claims 10 to 13, wherein in the step of performing the crushing treatment, the shaping treatment, and the classification treatment on the coke raw material to obtain the graphite precursor,
a volume distribution particle size Dv1 of the obtained graphite precursor is greater than or equal to 0.3 µm, and is optionally from 0.3 µm to 1.4 µm; and/or
a volume distribution particle size Dv10 of the obtained graphite precursor is greater than or equal to 2.0 µm, and is optionally from 2.1 µm to 4.0 µm; and/or
a volume distribution particle size Dv50 of the obtained graphite precursor is from 5 µm to 16 µm, and is optionally from 8 µm to 11 µm; and/or
a particle size distribution (Dv90 - Dv10)/Dv50 of the obtained graphite precursor is from 1.05 to 1.61, and is optionally from 1.18 to 1.52.

15. The preparation method according to any one of claims 10 to 14, before placing the obtained graphite precursor in the graphitization furnace to perform the graphitization treatment at the preset temperature for the preset time, further comprising a step of: performing pre-carbonization treatment on the obtained graphite precursor;
optionally, the obtained graphite precursor is heated to a temperature from 600°C to 1100°C at a temperature rising rate from 1 °C/min to 5 °C/min and held at the temperature for 18 h to 24 h for the pre-carbonization treatment.

16. The preparation method according to any one of claims 10 to 15, further comprising a step of: after placing the obtained graphite precursor in the graphitization furnace to perform the graphitization treatment at the preset temperature for the preset time, performing sieving and demagnetization to obtain the graphite material.

17. The preparation method according to any one of claims 10 to 16,
further comprising a step of: mixing the obtained graphite material with a coating agent and placing a mixture in a carbonization furnace to perform carbonization treatment, to form a carbon layer on a surface of the graphite material;
optionally, the coating agent comprises pitch, and more optionally, a softening point temperature of the pitch is from 150°C to 300°C, and is optionally from 200°C to 250°C; and/or
optionally, a temperature of the carbonization treatment is from 950°C to 1300°C, and is optionally from 1100°C to 1200°C; and/or
optionally, time of the carbonization treatment is from 1 h to 5 h, and is optionally from 2 h to 3 h.

18. A negative electrode plate, comprising a negative electrode current collector and a negative electrode film layer located on at least one surface of the negative electrode current collector, wherein the negative electrode film layer comprises the graphite material according to any one of claims 1 to 9 or the graphite material prepared by the preparation method according to any one of claims 10 to 17.

19. The negative electrode plate according to claim 18, wherein
a compaction density of the negative electrode film layer is from 1.15 g/cm³ to 1.55 g/cm³; and/or
an areal density of the negative electrode film layer is from 7 mg/cm² to 15 mg/cm².

20. A battery, comprising the negative electrode plate according to claim 18 or19.

21. A power consuming apparatus, comprising the battery according to claim 20, wherein the battery is used for providing electrical energy.
